# EUROPÄISCHE PATENTANMELDUNG

(11) **EP 2 034 273 A2**
(43) Veröffentlichungstag der Anmeldung: **11.03.2009**
(21) Anmeldenummer: 08012970.3
(22) Anmeldetag: 18.07.2008
(51) Int. Cl.: G01C 21/36

(54) **Navigationsgerät und Verfahren zum Betrieb eines Navigationsgeräts**

(30) Priorität: 05.09.2007 DE 102007042038
(71) Anmelder: Navigon AG, 20251 Hamburg (DE)
(72) Erfinder: Schliermann, Christian, 97246 Eibelstadt (DE)
(74) Vertreter: von den Steinen, Axel

(57) **Zusammenfassung**

Die Erfindung betrifft ein Navigationsgerät (1), umfassend
- eine Eingabeeinrichtung, an der Bedienerbefehle und/oder Ortsangaben, insbesondere Startpunkte und/oder Zielpunkte, eingegeben werden können,
- eine Wegnetzdatenbank,
- eine Routenberechnungseinheit zur Berechnung.einer geplanten Route unter Berücksichtigung der Ortsangaben und der Wegenetzdatenbank,

wobei die Route vom Startpunkt zum Zielpunkt führt,
- eine Signalempfangseinheit zum Empfang von Positionssignalen, insbesondere GPS-Signalen,
- eine Positionsermittlungseinheit, die die aktuelle Position aus den Positionssignalen bestimmt,
- zumindest eine optische Anzeigeeinrichtung,

wobei das Navigationsgerät (1) eine editierbare Bilddatenbank umfasst, in der zur Anzeige an der Anzeigeeinrichtung vorgesehene Bilddateien (7) benutzerdefiniert verwaltet werden können.
Die Erfindung betrifft weiterhin ein Verfahren zum Betrieb eines Navigatiorisgeräts.

## Beschreibung

Die Erfindung betrifft ein Navigationsgerät gemäß dem Oberbegriff des Anspruchs 1. Weiter betrifft die Erfindung ein Verfahren zum Betrieb eines Navigationsgeräts gemäß dem Oberbegriff des unabhängigen Verfahrenanspruchs.

Gattungsgemäße Navigationsgeräte werden insbesondere, jedoch keineswegs ausschließlich, in Fahrzeugen benutzt, um den Fahrer von einem Startpunkt zu einem Zielpunkt zu führen. Es sind dabei mobile Navigationsgeräte und fest eingebaute Navigationsgeräte bekannt. Unter Benutzung einer Wegnetzdatenbank wird mit einer Routenberechnungseinheit eine Route berechnet, die vom Startpunkt zum Zielpunkt führt. Mittels einer Signalempfangseinheit werden Positionssignale, insbesondere GPS-Signale, empfangen und daraus in einer Positionsermittlungseinheit die aktuelle Position bestimmt. Eine Anzeigeeinrichtung, beispielsweise ein Flachbilddisplay, dient dann zur optischen Anzeige der Fahrroutc bzw. zur Anzeige von Benutzermenüs.

Bekannte Navigationsgeräte sind vom Hersteller vorkonfiguriert, so dass ihre Erscheinungsform für alle Benutzer gleich ist. Eine individuelle Anpassung der Erscheinungsform ist bei bekannten Navigationsgeräten nicht möglich. Insofern kann der Benutzer die Erscheinungsform des Navigationsgeräts nicht auf seine individuellen Wünsche und Vorlieben abstimmen.

Ausgehend von diesem Stand der Technik ist es deshalb Aufgabe der vorliegenden Erfindung, ein neues Navigationsgerät vorzuschlagen, dessen Erscheinungsform individuell auf die Bedürfnisse einzelner Benutzer zugeschnitten werden kann. Weiter ist es Aufgabe der vorliegenden Erfindung, ein entsprechendes Verfahren zum Betrieb eines Navigationssystems vorzuschlagen.

Diese Aufgaben werden durch ein Navigationsgerät bzw. durch ein Verfahren nach der Lehre der beiden unabhängigen Hauptansprüche gelöst.

Vorteilhafte Ausführungsformen der Erfindung sind Gegenstand der Unteransprüche.

Grundgedanke der Erfindung ist es, dass im Navigationsgerät eine editierbare Bilddatenbank vorgesehen ist. In dieser Bilddatenbank kann der Benutzer nach eigenen Wünschen Bilddateien verwalten, insbesondere abspeichern. Die in der Bilddatenbank enthaltenen Bilddateien mit den darin enthaltenen Bildinhalten können dann zur Individualisierung des Erscheinungsbildes des Navigationsgeräts genutzt werden. Durch geeigneten Programmaufruf können die Bildinhalte aus den Bilddateien vom Navigationsgerät programmgesteuert ausgelesen und an der Anzeigeeinrichtung angezeigt werden. Es gibt vielfältige Möglichkeiten zur Individualisierung des Erscheinungsbildes des Navigationsgeräts unter Verwendung der individuell verwalteten Bilddateien. Nach einer bevorzugten Ausführungsform ist vorgesehen, dass die Bilddatenbank Bestandteil einer Adressdatenbank ist bzw. mit einer Adressdatenbank verknüpft wird. Einzelnen Adressen in der Adressdatenbank kann dann benutzerdefiniert eine Bilddatei zugeordnet werden. Wird während des Betriebs des Navigationsgeräts auf eine Adresse zugegriffen, der eine benutzerdefinierte Bilddatei zugeordnet ist, kann der Bildinhalt dieser Bilddatei entsprechend angezeigt werden.

Um die Anzahl von zu speichernden Bilddateien zu reduzieren, können in der Adressdatenbank Adressgruppen gebildet werden. Allen Adressen der gleichen Adressgruppe wird dann eine benutzerdefinierte Bilddatei gemeinsam zugeordnet. Beispielsweise können alle Standorte eines Unternehmens eine Adressgruppe bilden, wobei allen Adressen dieser Adressgruppe das gemeinsame Unternehmens-Icon als Bilddatei zugeordnet ist.

Welche Art von Bildinhalten in den in der Bilddatenbank gespeicherten Bilddateien enthalten ist, ist grundsätzlich beliebig. Einen besonders hohen Wiedererkennungswert und eine entsprechend hohe Individualisierung enthalten Bilddateien, in denen Photoaufnahmen, insbesondere Photoaufnahmen von Bauwerken und Personen, gespeichert sind. So ist es beispielsweise möglich, zu einer Adresse das Bild des an der Adresse befindlichen Bauwerks, beispielsweise einer Kirche oder einer Firmenzentrale, zu speichern. Auch können Portraitaufnahmen oder andere Personenaufnahmen zu bestimmten Adressen gespeichert werden.

Nicht nur die Zuordnung von Bilddateien zu bestimmten Adressen ist besonders sinnvoll. Gemäß einer zweiten Variante können auch bestimmte Anzeigefunktionen des Navigationsgeräts durch den Benutzer individuell umgestaltet werden. Dazu werden bestimmte Anzeigefunktionen des Navigationsgeräts mit benutzerdefinierten Bilddateien verknüpft. Sobald die Anzeigefunktion programmgesteuert aufgerufen wird, wird die entsprechende Bilddatei an der Anzeigeeinrichtung angezeigt. Bei solchen individualisierten Anzeigefunktionen kann es sich beispielsweise um einzublendende Buttons bzw. Tasten handeln.

Insbesondere für die individuelle Gestaltung von Anzeigefunktionen, jedoch keineswegs ausschließlich, ist die Verwendung von schematisierten Bildgraphiken vorteilhaft. Solche schematisierten Bildgraphiken, die auch als Icons bezeichnet werden, können als Bilddateien in der Bilddatenbank abgespeichert und beispielsweise einer bestimmten Anzeigefunktion zugeordnet werden. Selbstverständlich ist es aber auch möglich, solche schematisierten Bildgraphiken auch anderen Funktionselementen, beispielsweise einer Adresse aus einer Adressdatenbank, zuzuordnen.

Von großer Bedeutung für das Erscheinungsbild eines Navigationsgeräts ist die Anzeigefunktion zur Anzeige der aktuellen Position eines Fahrzeugs. Diese Anzeigefunktion wird häufig durch ein schematisiertes Pfeilsymbol realisiert, wobei dieses Pfeilsymbol an der aktuellen Position des Fahrzeugs in einer an der Anzeigeeinrichtung dargestellten Karte eingeblendet wird. Um diese für das Erscheinungsbild des Navigationsgeräts wichtige Anzeigefunktion zu individualisieren, wird vorgeschlagen, an der Stelle der aktuellen Position des Fahrzeugs eine in der Bilddatenbank gespeicherte, benutzerdefinierte Bilddatei einzublenden. Bei dieser Bilddatei kann es sich insbesondere um ein entsprechend geeignetes Fahrzeug-Icon handeln. Die unterschiedlichen Fahrzeughersteller haben durch Benutzung entsprechend individualisierter Fahrzeug-Icons die Möglichkeit, die in ihren Fahrzeugen verbauten Navigationsgeräte typenspezifisch auf ihre Fahrzeugtypen abzustimmen.

Bei Speicherung einer größeren Anzahl von Bilddateien in der Bilddatenbank ist die Zurverfügungstellung von einem entsprechend großen Speicherplatz notwendig. Um die Größe des Speicherplatzes individuell auf die Bedürfnisse des Benutzers abstimmen zu können, ist es deshalb besonders vorteilhaft, wenn die Bilddateien auf einem Wechselspeichermedium, insbesondere auf einer auswechselbaren Speicherkarte, abgespeichert sind. Dadurch erhält der Benutzer die Möglichkeit, durch Auswechslung des Wechselspeichermediums den zur Verfügung gestellten Speicherplatz entsprechend zu vergrößern.

Das erfindungsgemäße Verfahren zeichnet sich dadurch aus, dass Bilddateien in einer editierbaren Bilddatenbank des Navigationsgeräts vom Benutzer abgespeichert werden und nach Aufruf der Bilddatei der Inhalt der Bilddatei programmgesteuert an der Anzeigeeinrichtung angezeigt wird. Im Ergebnis besteht somit für den Benutzer die Möglichkeit, individualisierte Bildinhalte am Navigationsgerät abzuspeichern, wobei diese Bildinhalte vom Navigationsgerät automatisch entsprechend dem vorprogrammierten Programmablauf aus der Bilddatenbank abgerufen und angezeigt werden.

Wurde eine Bilddatei einer Adresse aus einer Adressdatenbank zugeordnet, so ist nach einer ersten bevorzugten Verfahrensvariante vorgesehen, dass bei Einblendung eines Kartenausschnitts an der Anzeigeeinrichtung, die eine Adresse mit zugeordneter Bilddatei umfasst, an der Position der Adresse der Bildinhalt der zugeordneten Bilddatei angezeigt wird. Im Ergebnis führt dies dazu, dass bei der Routenführung dem Benutzer immer individuelle Bildinhalte aus der Bilddatenbank angezeigt werden, wenn Karteninhalte mit Adressen, denen individuelle Bilddateien zugeordnet sind, angezeigt werden. Ein Außendienstmitarbeiter hat somit beispielsweise die Möglichkeit, an den Standorten seiner Kunden das jeweilige Firmenlogo der Kunden einblenden zu lassen.

Gemäß einer zweiten Verfahrensvariante für die Verknüpfung von Bilddateien mit Adressen aus einer Adressdatenbank ist vorgesehen, dass bei Anzeige von Auswahlmenüs, die Adressen mit zugeordneter Bilddatei umfassen, an der Position der Adresse die zugeordnete Bilddatei angezeigt wird. Beispielsweise kann bei Anzeige von Zielorten, die bereits angefahren wurden, statt der jeweiligen Adresse ein Bild alternativ bzw. additiv angezeigt werden, um dem Benutzer die Auswahl zu erleichtern.

Um dem Benutzer die Zuordnung von Bilddateien zu Adressen aus der Adressdatenbank zu erleichtern, ist es besonders vorteilhaft, wenn bei Anlage einer neu in der Adressdatenbank abzuspeichernden Adresse eine Liste mit allen verfügbaren Bilddateien eingeblendet wird. Durch einfaches Anwählen einer Bilddatei kann der Adresse dann eine Bilddatei fest zugeordnet werden.

Abhängig vom Anzeigemaßstab und der Größe der Anzeigeeinrichtung ist die Anzeige von einzelnen Adressen zugeordneten Bilddateien nicht immer sinnvoll bzw. muss die Bildgröße sinnvoll auf die zur Verfügung stehende Displaygröße abgestimmt werden. Um dies zu ermöglichen, kann den einzelnen Bilddateien ein Bilddateiprioritätswert zugeordnet werden. Sobald der Bildinhalt der entsprechenden Bilddatei angezeigt werden soll, wird die Darstellung der Bilddatei, insbesondere die Bildgröße der angezeigten Bilddatei, abhängig vom Maßstab des Kartenausschnitts und abhängig vom Bilddateiprioritätswert verändert. Bilddateien mit hohem Bilddateiprioritätswert werden dabei bevorzugt und entsprechend größer dargestellt, wohingegen Bilddateien mit geringerem Bilddateiprioritätswert verkleinert werden bzw. nicht angezeigt werden.

Um die Bilddateien in einfacher Weise auf das Navigationsgerät laden zu können, ist es besonders vorteilhaft, eine Datenverbindung zu einer Datenbank, beispielsweise zu einem Internetserver, zu schaffen. Auf diese Weise können große Bilddateien bzw. große Bilddatenbanken problemlos auf das Navigationsgerät heruntergeladen und dort abgespeichert werden.

Gemäß einer weiteren Verfahrensvariante ist es vorgesehen, dass auch einzelnen in der Wegnetzdatenbank vorgespeicherten Orten, insbesondere so genannten Points of Interest (POI), eine Bilddatei zugeordnet wird. So kann beispielsweise einem berühmten Baudenkmal, z.B. dem Kölner Dom, ein Bild des Baudenkmals zugeordnet sein.

Besonders einfach kann die Zuordnung von Bilddateien zu in der Wegnetzdatenbank vorgespeicherten Orten dadurch erreicht werden, dass ein solcher vorgespeicherter Ort als neue Adresse in einer Adressdatenbank abgespeichert wird, wobei bei der Abspeicherung des vorgespeicherten Orts in der Adressdatenbank jeweils eine Zuordnung mit einer Bilddatei geschaffen wird.

Um Probleme mit zu großen Bilddateien auszuschließen, kann die Größe der Bilddatei bei der Speicherung und/oder Zuordnung zu einer Adresse oder Anzeigefunktion programmgesteuert überprüft werden.

Wird bei der Überprüfung der Größe der Bilddatei eine Überschreitung einer vordefinierten Maximalgröße festgestellt, kann die Speicherung bzw. Zuordnung der Bilddatei ausgeschlossen und dann beispielsweise eine entsprechende Fehlermeldung ausgegeben werden.

Alternativ dazu kann bei Überschreitung der vordefinierten Maximalgröße auch eine automatische Verkleinerung der Bilddatei, beispielsweise durch entsprechende Skalierung der Bilddatei, vorgenommen werden.

Verschiedene Aspekte der Erfindung sind in den Zeichnungen schematisiert dargestellt und werden nachfolgend beispielhaft erläutert.

Es zeigen:
- Fig. 1: die Anzeigeeinrichtung eines Navigationsgeräts bei Editierung der Adressdatenbank unter Zuordnung einer Bilddatei zu einer Adresse;
- Fig. 2: die Anzeigeeinrichtung gemäß Fig. 1 bei Darstellung einer Karte unter Einblendung der gemäß Fig. 1 editierten Adresse.

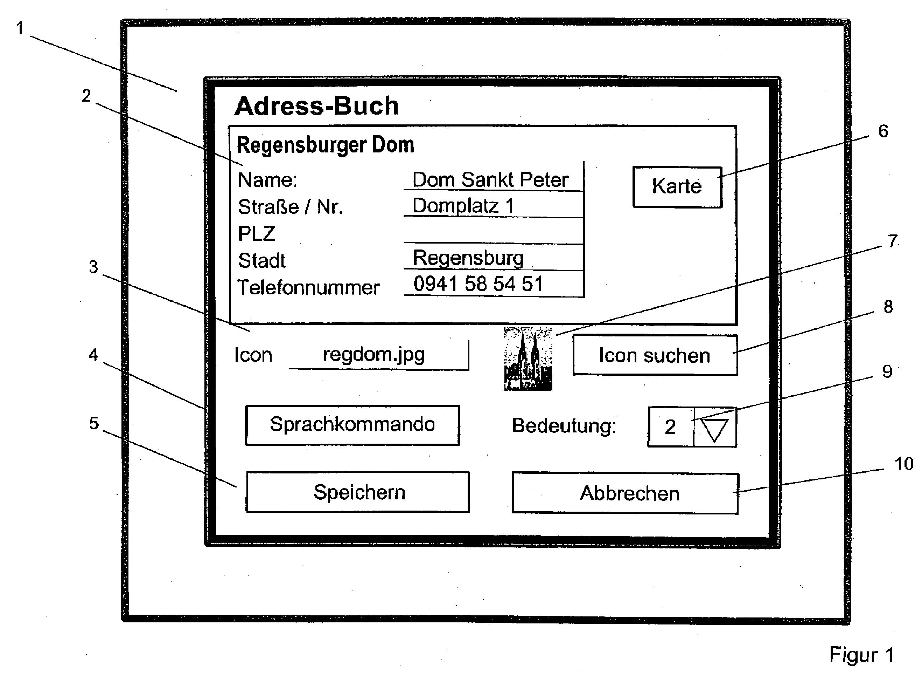

Fig. 1 zeigt schematisiert die Anzeigeeinrichtung eines Navigationsgeräts 1 bei der Editierung einer Adressdatenbank. In Fig. 1 ist dabei die Abspeicherung einer neuen Adresse im Adressbuch dargestellt. Für jeden Adressbucheintrag gibt es eine eingeblendete Karteikarte, in welcher alle Daten der jeweiligen Adresse eingetragen und modifiziert werden können. In einem ersten Adressdatenfeld 2 können der Name des Ziels, die Straße des Ziels, die Stadt des Ziels und eine zugehörige Telefonnummer eingetragen und abgespeichert werden.

Zusätzlich besteht die Möglichkeit, der im Adressfeld 2 eingetragenen Adresse eine in einer Bilddatenbank gespeicherte Bilddatei benutzerdefiniert zuzuordnen. Dazu wird in einem Bilddateifeld 3 der Dateiname der entsprechenden Bilddatei, im dargestellten Beispiel der Dateiname "regdom.jpg" eingetragen. Um die Eintragung des entsprechenden Bilddateinamens zu erleichtern, kann die Taste 8 "Icon suchen" betätigt werden, um den Benutzer in einen Dateiauswahldialog zu führen. In diesem nicht dargestellten Dateiauswahldialog kann der Benutzer unter allen in der Bilddatenbank gespeicherten Bilddateien eine Datei auswählen und dem Adressbucheintrag zuordnen.

Weiterhin kann mit der Adresse in einem Feld 9 ein Bilddateiprioritätswert abgespeichert werden. Im dargestellten Beispiel hat die Bilddatei "regdom.jpg" den Bilddateiprioritätswert 2. Anhand des Bilddateiprioritätswertes wird festgelegt, bei welchem Maßstab der Bildinhalt 7 der Bilddatei "regdom.jpg" dargestellt wird.

Mittels einer Taste 4 können außerdem der Adresse zwei Sprachkommandos zugeordnet werden. Durch Drücken der Taste 5 wird der Adressbucheintrag gespeichert. Durch Drücken der Taste 10 kann der Adressbucheintrag verworfen und die Speicherung abgebrochen werden.

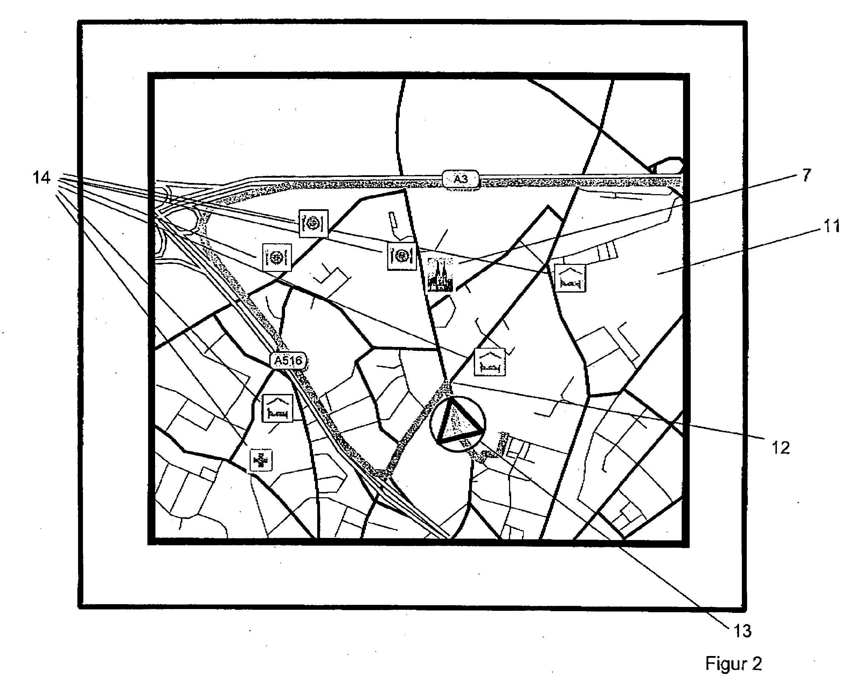

In Fig. 2 ist beispielhaft die Darstellung einer Karte 11 am Navigationssystem 1 gezeigt. An der Stelle der Adresse "Dom Sankt Peter, Domplatz 1, Regensburg" wird der Bildinhalt 7, der der Adresse zugeordnet ist, in die Karte 11 eingeblendet. Außerdem werden in der Karte 11 die Route 12 und die aktuelle Fahrzeugposition 13 eingeblendet. Die aktuelle Fahrzeugposition 13 ist im dargestellten Beispiel als schematisiertes Pfeilsymbol gestaltet. Statt eines solchen Pfeilsymbols kann die aktuelle Fahrzeugposition auch durch ein geeignetes Fahrzeug-Icon, das beispielsweise spezifisch auf den jeweiligen Fahrzeugtyp abgestimmt ist, dargestellt werden.

Darüber hinaus sind in der Karte 11 neben Straßenelementen auch Icons für Points of Interest (POI) 14 eingezeichnet. Je nach Konfiguration und Maßstab ist die Auswahl der in der jeweiligen Kartendarstellung zur Anzeige gebrachten POI-Icons 14 unterschiedlich. Im Beispiel sind vorgespeicherte Standard-Icons für Restaurants, Hotels und ein Krankenhaus dargestellt.

## Patentansprüche

1. Navigationsgerät (1), umfassend
- eine Eingabeeinrichtung, an der Bedienerbefehle und/oder Ortsangaben, insbesondere Startpunkte und/oder Zielpunkte, eingegeben werden können,
- eine Wegnetzdatenbank,
- eine Routenberechnungseinheit zur Berechnung einer geplanten Route unter Berücksichtigung der Ortsangaben und der Wegenetzdatenbank, wobei die Route vom Startpunkt zum Zielpunkt führt,
- eine Signalempfangseinheit zum Empfang von Positionssignalen, insbesondere GPS-Signalen,
- eine Positionsermittlungseinheit, die die aktuelle Position aus den Positionssignalen bestimmt,
- zumindest eine optische Anzeigeeinrichtung,
**dadurch gekennzeichnet,**
**dass** das Navigationsgerät (1) eine editierbare Bilddatenbank umfasst, in der zur Anzeige an der Anzeigeeinrichtung vorgesehene Bilddateien (7) benutzerdefiniert verwaltet werden können.

2. Navisationsgerät nach Anspruch 1.
**dadurch gekennzeichnet,**
**dass** die Bilddatenbank Bestandteil einer Adressdatenbank ist oder mit einer Adressdatenbank verknüpft werden kann, wobei einzelnen Adressen (2) der Adressdatenbank eine benutzerdefinierte Bilddatei (7) zugeordnet ist.

3. Navigationsgerät nach Anspruch 2,
**dadurch gekennzeichnet,**
**dass** mehrere Adressen der Adressdatenbank eine Adressgruppe bilden, wobei allen Adressen der Adressgruppe eine benutzerdefinierte Bilddatei zugeordnet ist.

4. Navigationsgerät nach einem der Ansprüche 1 bis 3,
**dadurch gekennzeichnet,**
**dass** Photoaufnahmen, insbesondere Photoaufnahmen von Bauwerken oder Personen, als Bilddateien (7) in der Bilddatenbank gespeichert sind.

5. Navigationsgerät nach einem der Ansprüche 1 bis 3,
**dadurch gekennzeichnet,**
**dass** schematisierte Bildgraphiken (Icons) als Bilddateien in der Bilddatenbank gespeichert sind.

6. Navigationsgerät nach einem der Ansprüche 1 bis 5,
**dadurch gekennzeichnet,**
**dass** das Navigationsgerät (1) graphische Anzeigefunktionen umfasst, die an der Anzeigeeinrichtung angezeigt werden, wobei einzelnen Anzeigefunktionen eine benutzerdefinierte Bilddatei zugeordnet ist, und wobei bei Aufruf der Anzeigefunktion die zugeordnete Bilddatei (7) angezeigt wird.

7. Navigationsgerät nach Anspruch 6,
**dadurch gekennzeichnet,**
**dass** eine graphische Anzeigefunktion zur Anzeige der aktuellen Position eines Fahrzeuges vorgesehen ist, wobei in einer mit der Anzeigeeinriehtung dargestellten Karte an der aktuellen Position des Fahrzeugs eine benutzerdefinierte Bilddatei, insbesondere ein Fahrzeugicon, eingeblendet werden kann.

8. Navigationsgerät nach einem der Ansprüche 1 bis 7,
**dadurch gekennzeichnet,**
**dass** die Bilddateien auf einem Wechselspeichermedium, insbesondere auf einer auswechselbaren Speicherkarte, abgespeichert sind.

9. Verfahren zum Betrieb eines Navigationsgeräts (1), umfassend
- eine Eingabeeinrichtung, an der Bedienerbefehle und/oder Ortsangaben, insbesondere Startpunkte und/oder Zielpunkte, eingegeben werden können,
- eine Wegnetzdatenbank,
- eine Routenberechnungseinheit zur Berechnung einer geplanten Route unter Berücksichtigung der Ortsangaben und der Wegenetzdatenbank, wobei die Route vom Startpunkt zum Zielpunkt führt,
- eine Signalempfangseinheit zum Empfang von Positionssignalen, insbesondere GPS-Signalen,
- eine Positionsermittlungseinheit, die die aktuelle Position aus den Positionssignalen bestimmt,
- zumindest eine optische Anzeigeeinrichtung,
**dadurch gekennzeichnet,**
**dass** vom Benutzer des Navigationsgeräts (1) eine Bilddatei (7) in einer editierbaren Bilddatenbank des Navigationsgeräts abgespeichert und nach Aufruf der Bilddatei der Bildinhalt der Bilddatei (7) an der Anzeigeeinrichtung angezeigt wird.

10. Verfahren nach Anspruch 9,
**dadurch gekennzeichnet,**
**dass** die Bilddatenbank Bestandteil einer Adressdatenbank ist oder mit einer Adressdatenbank verknüpft werden kann, wobei einzelnen Adressen (2) der Adressdatenbank eine benutzerdefinierte Bilddatei (7) zugeordnet ist, und wobei bei Anzeige eines Kartenausschnitts (11) an der Anzeigeeinrichtung, die eine Adresse (2) mit zugeordneter Bilddatei (7) umfasst, an der Position der Adresse der Bildinhalt der zugeordneten Bilddatei (7) angezeigt wird.

11. Verfahren nach Anspruch 9 oder 10,
**dadurch gekennzeichnet,**
**dass** die Bilddatenbank Bestandteil einer Adressdatenbank ist oder mit einer Adressdatenbank verknüpft werden kann, wobei einzelnen Adressen (2) der Adressdatenbank eine benutzerdefinierte Bilddatei (7) zugeordnet ist, und wobei bei Anzeige eines Auswahlmenüs an der Anzeigeeinrichtung, die eine Adresse (2) mit zugeordneter Bilddatei (7) umfasst, an der Position der Adresse die zugeordnete Bilddatei angezeigt wird.

12. Verfahren nach einem der Ansprüche 9 bis 11,
**dadurch gekennzeichnet,**
**dass** bei Editierung einer neu in der der Adressdatenbank abzuspeichernden Adresse (2) eine Liste von verfügbaren Bilddateien eingeblendet wird, wobei durch Anwahl eine Bilddatei (7) der neuen Adresse (2) zugeordnet wird.

13. Verfahren nach einem der Ansprüche 9 bis 12,
**dadurch gekennzeichnet,**
**dass** eine Anzeigefunktion, der eine benutzerdefinierte Bilddatei zugeordnet ist, programmgesteuert aufgerufen und danach der Bildinhalt einer der Anzeigefunktion zugeordneten Bilddatei (7) angezeigt wird.

14. Verfahren nach Anspruch 13,
**dadurch gekennzeichnet,**
**dass** an der Anzeigeeinrichtung eine Karte (11) mit der aktuellen Position eines Fahrzeuges angezeigt wird, wobei ein benutzerdefiniertes Fahrzeugicon aus der Bilddatenbank ausgelesen und an der aktuellen Position des Fahrzeuges in der Karte (11) angezeigt wird.

15. Verfahren nach einem der Ansprüche 9 bis 14,
**dadurch gekennzeichnet,**
**dass** einzelnen Adressen (2) der Adressdatenbank mit zugeordneter Bilddatei (7) ein Bilddateiprioritätswert (9) zugeordnet ist, wobei die Darstellung der angezeigten Bilddatei (7), insbesondere die Bildgröße der angezeigten Bilddatei (7), abhängig vom Maßstab des Kartenausschnitts und/oder abhängig vom Bilddateiprioritätswert verändert wird.

16. Verfahren nach einem der Ansprüche 9 bis 15,
**dadurch gekennzeichnet,**
**dass** die Bilddateien (7) über eine Datenverbindung aus einer Datenbank, insbesondere von einem Internetserver, auf das Navigationsgerät heruntergeladen und auf dem Navigationsgerät gespeichert werden.

17. Verfahren nach einem der Ansprüche 9 bis 16,
**dadurch gekennzeichnet,**
**dass** einem in der Wegnetzdatenbank vorgespeicherten Ort, insbesondere einem Point of Interest (POI), eine Bilddatei (7) zugeordnet wird.

18. Verfahren nach Anspruch 17,
**dadurch gekennzeichnet,**
**dass** ein in der Wegnetzdatenbank vorgespeicherter Ort, insbesondere ein Point of Interest (POI), als neue Adresse (2) unter gleichzeitiger Zuordnung einer Bilddatci (7) in der Adressdatenbank abgespeichert wird.

19. Verfahren nach einem der Ansprüche 9 bis 18,
**dadurch gekennzeichnet,**
**dass** bei Speicherung und/oder Zuordnung einer Bilddatei (7) zu einer Adresse (2) oder einer Anzeigefunktion die Größe der Bilddatei (7) programmgesteuert überprüft wird.

20. Verfahren nach Anspruch 19,
**dadurch gekennzeichnet,**
**dass** bei Überschreitung einer vordefinierten Maximalgröße die Speicherung und/oder Zuordnung der Bilddatei (7) ausgeschlossen ist.

21. Verfahren nach Anspruch 19,
**dadurch gekennzeichnet,**
**dass** bei Überschreitung einer vordefinierten Maximalgröße die Größe der Bilddatei (7), insbesondere durch Skalierung, automatisch verkleinert wird.
